(19) Europäisches Patentamt
European Patent Office
Office européen des brevets

(11) Publication number: **0 124 276**
**B1**

(12) **EUROPEAN PATENT SPECIFICATION**

(45) Date of publication of patent specification: **22.03.89**

(51) Int. Cl.$^4$: **C 08 G 61/12,** C 08 G 67/00

(21) Application number: **84302190.8**

(22) Date of filing: **30.03.84**

(60) **Divisional application 87200609 filed on 31.03.87.**

(54) **Preparation of aromatic polymers.**

(30) Priority: **31.03.83 US 481083**

(43) Date of publication of application:
**07.11.84 Bulletin 84/45**

(45) Publication of the grant of the patent:
**22.03.89 Bulletin 89/12**

(84) Designated Contracting States:
**AT BE CH DE FR IT LI LU NL SE**

(56) References cited:
**US-A-3 065 205**
**US-A-3 385 825**
**US-A-4 247 682**

(73) Proprietor: **RAYCHEM CORPORATION (a Delaware corporation)**
**300 Constitution Drive**
**Menlo Park, California 94025 (US)**

(72) Inventor: **Jansons, Viktors**
**123 New York Avenue**
**Los Gatos California (US)**
Inventor: **Gors, Heinrich Carl**
**2508 Mardell Way**
**Mountain View California (US)**

(74) Representative: **Jay, Anthony William et al**
**Raychem Limited Intellectual Property Law Department Faraday Road**
**Dorcan Swindon Wiltshire (GB)**

**EP 0 124 276 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of preparing poly(arylene ether ketones) and in particular to an electrophilic polymerization process for preparing such polymers.

Poly(arylene ether ketones), in particular all para-linked poly(arylene ether ketones), possess many desirable properties, for example, high temperature stability, mechanical strength, and resistance towards common solvents. The preparation of poly(arylene ether ketones) by two different approaches has been described in the literature. The first approach is an electrophilic synthesis in which an aryl ketone linkage is formed. The second is a nucleophilic synthesis in which an aryl ether linkage is formed. This invention is directed to an improved electrophilic synthesis for preparing poly(arylene ether ketones), in particular para-linked poly(aryl ether ketones).

In such an electrophilic synthesis, the polymerization step involves the formation of an aryl ketone group from a carboxylic acid or acid derivative group and an aromatic compound containing an aromatic carbon bearing an activated hydrogen atom, i.e., a hydrogen atom displaceable under the electrophilic reaction conditions. The monomer system employed in the polymerization can be, for example, (a) a single aromatic compound containing both a carboxylic acid or acid derivative group as well as an activated hydrogen atom on an aromatic carbon for example, p-phenoxybenzoyl chloride; or (b) a two-component system of a dicarboxylic acid or acid derivative and an aromatic compound containing two activated hydrogen atoms, for example, 1,4-diphenoxybenzene and terephthaloyl chloride.

Electrophilic polymerization of this type is often referred to as Friedel-Crafts polymerisation. Typically such polymerizations are carried out in a reaction medium comprising the reactant(s), a catalyst, such as anhydrous aluminum trichloride, and solvent such as methylene chloride, carbon disulfide, nitromethane, nitrobenzene, or ortho-dichlorobenzene. Because the carbonyl groups of the reactant(s) and products complex with aluminum trichloride and thereby deactivate it, the aluminum trichloride catalyst is generally employed in an amount greater than one equivalent for each equivalent of carbonyl groups in the reaction medium. Other inorganic halides such as ferric chloride, may be employed as the catalyst.

Such Friedel-Crafts polymerizations generally have produced an intractable reaction product difficult to remove from the reaction vessel and purify. Further, such processes have tended to produce polymer of undesirably low molecular weight and/or of poor thermal stability. The all para-linked poly(arylene ether ketones) have been particularly difficult to prepare under such Friedel-Crafts conditions. One factor that appears to contribute to the unsatisfactory results reported in the literature is that the para-linked polymers are more highly crystalline than the ortho, meta or mixed isomeric members of this polymer family and are therefore generally more insoluble in the reaction media typically used in such Friedel-Crafts reactions. This tends to result in the premature precipitation of the polymer in low molecular weight form. Another factor that may lead to these poor results is deactivation of the terminal aryloxy groups by complexation with aluminum chloride or alkylation of the terminal group which prevents further growths of the polymer chain. Also, side reactions, particularly at the ortho position of activated aromatic rings can result in a polymer that is branched and/or is more likely to cross-link at elevated temperatures such as those required for melt processing the polymer. It is generally recognized that in Friedel-Crafts reactions, ortho substitution of the polymer is more likely to occur if the reaction is conducted at elevated temperatures and/or for a relatively long reaction time. US—A—3,065,205, 3,767,620, 3,516,966, 3,791,890, 4,008,203 and GB—A—971,227 and 1,086,021 disclose the preparation of poly(arylene ketones) by Friedel-Crafts polymerization and generally acknowledge some of the difficulties in producing tractable, meltstable polymers. For example, US—A—3791890 provide a method of producing the polymers in granular form by special treatment of the reaction mixture before gellation can occur and US—A—3767620 provide the method of treating the polymer to reduce undesired end groups which result from side reactions during polymerization and which cause thermal instability of the polymer.

To overcome the disadvantages encountered in producing poly(arylene ketones) by the above described Friedel-Crafts polymerization, it has been proposed to use boron trifluoride catalyst in anhydrous hydrogen fluoride, as described, for example, in US—A—3,441,538, 3,442,857, 3,953,400, 4,247,682, and 3,956,240. This general process has been used commercially to produce polymer of the desired high molecular weight and thermal stability. However, the use of boron trifluoride and hydrogen fluoride requires special techniques and equipment making this process difficult to practice on a commercial scale.

We have now discovered an improved method for the production of poly(arylene ether ketones) by an electrophilic synthesis which results in high molecular weight, thermally stable polymers using reaction media that are readily handled on a commercial scale.

In the method of this invention, the Friedel-Crafts polymerization of appropriate monomer systems, as defined more fully hereinafter, is controlled to suppress side reactions including ortho substitution, alkylation and chain branching and/or to solubilize or swell the polymer, by the addition of a Lewis base to the reaction medium. By this method, a thermally stable, linear poly(arylene ether ketone) substantially free of pendant groups resulting from ortho substitution of para-linked aromatic rings in the polymer backbone can be obtained.

The invention accordingly provides a method of producing a poly(arylene ether ketone) which comprises polymerizing a monomer system comprising:

I (i) phosgene or an aromatic diacid dihalide together with

(ii) a polynuclear aromatic comonomer containing an arylene ether group and two active hydrogen atoms or

II a polynuclear aromatic monomer containing an acid halide group, an arylene ether group, and an active hydrogen atom,

in a reaction medium comprising a Lewis base, in an amount of 0.01 to 4 equivalents per equivalent of acid halide groups present in the monomer system; and a Lewis acid in an amount of at least one equivalent per equivalent of carbonyl groups present, plus one equivalent per equivalent of the Lewis base, plus an amount effective to act as a catalyst for the polymerization.

Another aspect of this invention provides a method of producing poly(arylene ether ketones) which comprises polymerizing a monomer system comprising:

I) i) phosgene or an aromatic diacid dihalide together with

ii) a polynuclear aromatic comonomer comprising:

(a) H—Ar—O—Ar—H

(b) H—$(Ar—O)_n$—Ar—H wherein n is 2 or 3

(c) H—Ar—O—Ar—$(CO—Ar—O—Ar)_m$—H wherein m is 1, 2 or 3 or

(d) H—$(Ar—O)_n$—Ar—CO—Ar—$(O—Ar)_m$—H wherein m is 1, 2 or 3, and n is 2 or 3 or

II) an acid halide of the formula:

H—Ar—O—$[(Ar—CO)_p—(Ar—O)_q—(Ar—O)_r]_k$—Ar—CO—Z wherein Z is halogen, k is 0, 1 or 2, p is 1 or 2, q is 0, 1 or 2 and r is 0, 1 or 2; or

III) an acid halide of the formula:

H—$(Ar—O)_n$—Ar—Y wherein n is 2 or 3 and Y is CO—Z or CO—Ar—CO—Z where Z is halogen;

wherein each Ar is independently selected from substituted or unsubstituted phenylene, and substituted and unsubstituted polynuclear aromatic moieties free of ketone carbonyl and ether oxygen groups; in a reaction medium comprising

A) a Lewis base in an amount of 0.01 to 4 equivalents per equivalent of acid halide groups present in the monomer system;

B) a Lewis acid in an amount of at least one equivalent per equivalent of carbonyl groups present, plus one equivalent per equivalent of the Lewis base, plus an amount effective to act as a catalyst for the polymerization; and

C) a non-protic diluent in an amount from 0 to 93% by weight, based on the weight of the total reaction mixture.

The method of this invention provides a high reaction rate which enables the reaction to be carried out at relatively low temperatures over a relatively short period of time. Further, the polymer is maintained in the reaction medium, for example in solution or in a reactive gel state, until high molecular weight polymer is obtained. Further, the polymer produced is essentially linear with little, if any, ortho substitution of the aromatic rings in the polymer backbone. Since the method of this invention maintains the polymer in solution or in a more tractable state, recovery and purification of the polymer is greatly facilitated.

The polymers produced by the process of the invention have repeat units of the general formula

$$—Ar—O—Ar—\overset{\overset{\displaystyle O}{\|}}{C}$$

wherein each Ar is independently selected from substituted and unsubstituted phenylene and substituted and unsubstituted polynuclear aromatic moieties. The term polynuclear aromatic moieties is used to mean aromatic moieties containing at least two aromatic rings. The rings can be fused, joined by a direct bond or by a linking group. In certain of the monomers, e.g. the polynuclear aromatic comonomers, the acid halide monomers and certain diacid dihalides, at elast two of the aromatic rings are linked by an ether oxygen linkage. Other linking groups which can join aromatic rings in the aromatic moieties include, for example, carbonyl, sulfone, sulfide, amide, imide, azo, alkylene, perfluoroalkylene.

The phenylene and polynuclear aromatic moieties can contain substituents on the aromatic rings. These substituents should not inhibit or otherwise interfere with the polymerization reaction to any significant extent. Such acceptable substituents include, for example, phenyl, halogen, nitro, cyano, alkyl, 2-aralkenyl, alkynyl.

These polymers are prepared in accordance with this invention by polymerizing an appropriate monomer system from those defined above.

Aromatic diacid dihalide employed is preferably a dichloride or dibromide. Illustrative diacid dihalides which can be used include, for example:

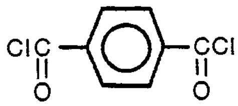

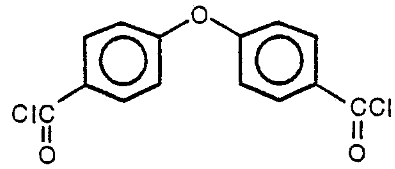

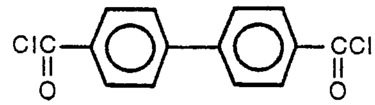

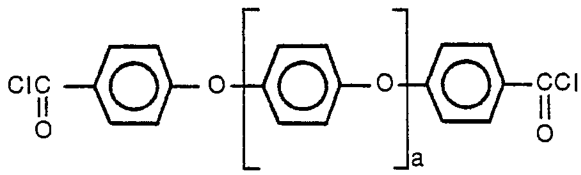

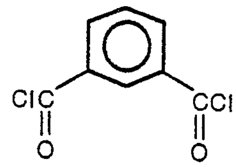

wherein a is 0—4

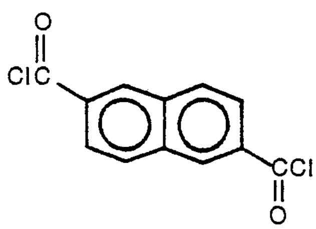

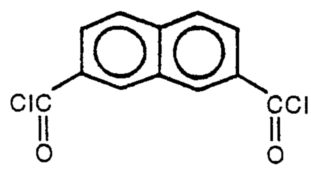

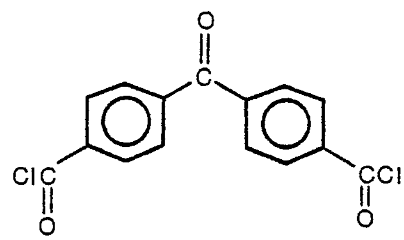

Illustrated polynuclear aromatic comonomers which can be used with such diacid halides are:

(a) E—Ar—O—Ar—H, which includes, for example:

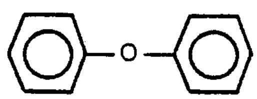

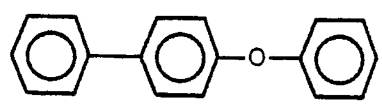

(b) H—(Ar—O)$_n$—Ar—H, which include, for example:

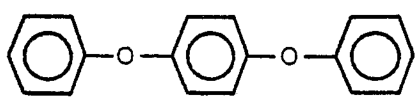

and

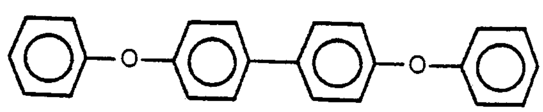

(c) H—Ar—O—Ar—(CO—Ar—O—Ar)$_m$—H, which includes, for example:

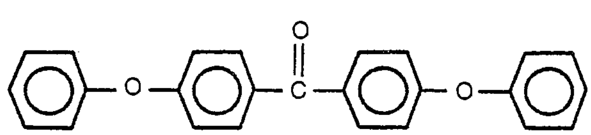

and (d) H—(Ar—O)$_n$—Ar—CO—Ar—(O—Ar)$_m$—H which includes, for example:

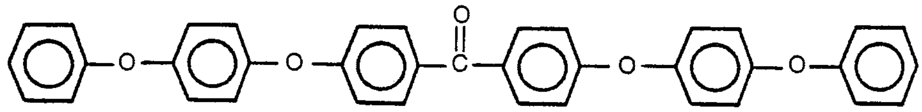

Monomer systems II and III comprise an acid halide. (The term acid halide is used herein to refer to a monoacid monohalide.) In monomer system II, the acid halide is of the formula

$$H—Ar—O—[(Ar—CO)_p—(Ar—O)_q—(Ar—CO)_r]_k—Ar—CO—Z$$

Such monomers include for example, where k = O

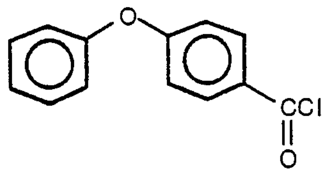

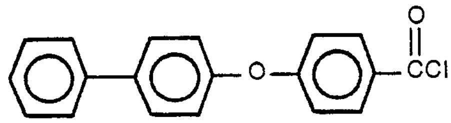

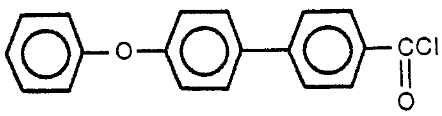

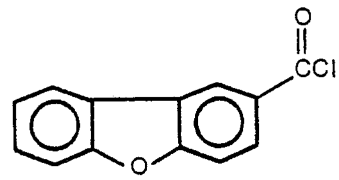

and where k = 1

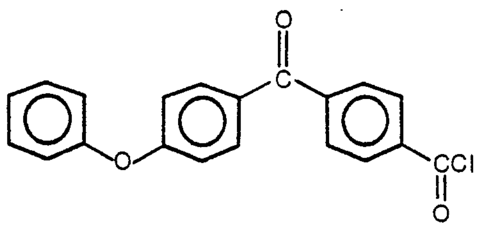

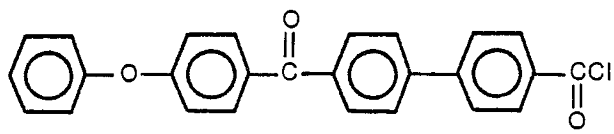

In monomer system III, the acid halide is of the formula

$$H—(Ar—O)_n—Ar—Y$$

Examples of such acid halides include

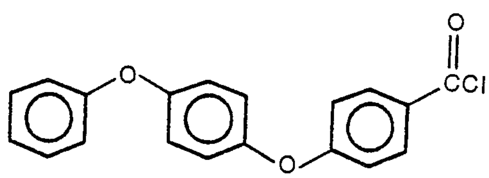

and

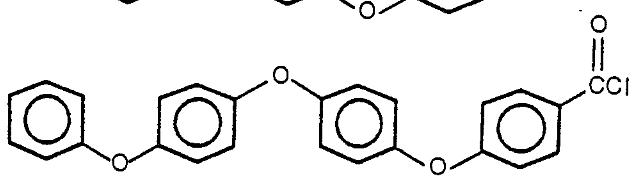

It is to be understood that combinations of monomers as set forth above, can be employed. For example, one or more diacid dihalides can be used with one or more polynuclear aromatic comonomers as long as the correct stoichiometry is maintained. Further, one or more acid halides can be included. In addition, monomers which do not contain an ether linkage can be employed as long as one or more comonomer used contains at least one ether oxygen linkage. Such comonomers include, for example:

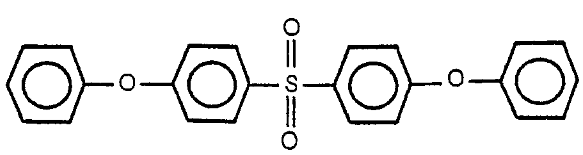

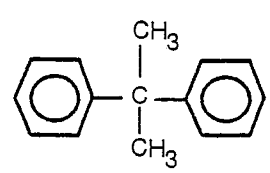

which can be used as the sole comonomer with an ether containing diacid dihalide or with phosgene or any diacid dihalide when used in addition to a polynuclear aromatic comonomer as defined in I(ii)(a), I(ii)(b), I(ii)(c) or I(ii)(d). Similarly,

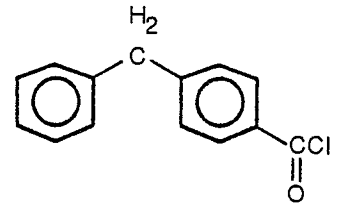

can be used as a comonomer together with an ether-containing polynuclear aromatic acid halide or as an additional comonomer together with a monomer system as defined in I.

The term "Lewis acid" is used herein to refer to a substance which can accept an unshared electron pair from another molecule. Lewis acids which can be used in the practice of this invention include, for example, aluminum trichloride, aluminum tribromide, antimony pentachloride, antimony pentafluoride, indium trichloride, gallium trichloride, boron trichloride, boron trifluoride, zinc chloride, ferric chloride, stannic chloride, titanium tetrachloride, and molybdenum pentachloride. The use of substantially anhydrous aluminum trichloride as the Lewis acid is preferred.

The amount of Lewis acid used in the practice of this invention varies depending on the particular monomers and reaction medium selected. The amount of Lewis acid used should be at least one equivalent of Lewis acid per equivalent of carbonyl groups present in the monomer, one equivalent per equivalent of Lewis base present in the reaction medium plus an amount effective to act as a catalyst for the polymerisation (also referred to herein as a catalytic amount). When aluminium chloride is used as the Lewis acid one equivalent is considered to be $AlCl_3$. Generally a catalytic amount added is from about 0.05 to about 0.3 equivalents of Lewis acid per equivalent of acid halide in the reaction mixture. Further, if as comonomer containing other basic species, such as sulfone groups, is used, additional Lewis acid may be required.

In this invention, the polymerisation reaction is controlled by the addition of a Lewis Base controlling agent which, inter alia, suppresses undesirable side reactions, particularly ortho substitution of activated aryloxy groups. Suppression of side reactions results in a polymer that is thermally stable, that is it does not degrade or cross-link when subjected to elevated temperatures, e.g. temepratures above the melting point of the polymer, for a period of time. For a polymer of this type to be suitable for melt processing, it must be able to withstand the processing temperatures for the required processing time. Typically these conditions require that the polymer can withstand temperatures up to about 30°C above the melting or softening point of the polymer for periods of at least 30 minutes, preferably at least 60 minutes and most preferably at least 90 minutes, without undesired gel formation of substantial change inherent viscosity.

The term "Lewis base" is used herein to refer to a substance capable of donating an unshared electron pair to a Lewis acid. Thus, the Lewis base forms a complex with the Lewis acid used in the reaction medium. It has been found that Lewis bases which form a 1:1 complex having a heat of association at least about that of diphenyl ether with the Lewis acid are preferred. For example, where aluminium trichloride is the Lewis acid, the Lewis base used should form a 1:1 complex having a heat of association of at least about 63 kJ (15 kcal)/mole, preferably at least about 83.5 kJ (20 kcal)/mole and most preferably at least about 125 kJ (30 kcal)/mole. While the heats of association are for a 1:1 Lewis acid/Lewis base complex consisting solely of these two components, the actual complex formed in the reaction medium need not be a 1:1 complex. A discussion on heats of association for Lewis acid/Lewis base complex is found in J. Chem Soc. (A), 1971, pages 3132—3135 (D. E. H. Jones et al). The Lewis base used should not be an acylating, alkylating or arylating agent nor should it be acylatable under the reaction conditions.

Mixtures of two or more Lewis bases can be used if desired. The Lewis base used as a controlling agent in the practice of this invention is an additional component added to the reaction medium. This does not include basic species formed *in situ* during the polymerization.

Typical Lewis bases which can be employed include, for example, amides, amines, esters, ethers, ketones, nitriles nitro compounds, phosphines, phosphine oxides, phosphoramides, sulfides, sulfones, sulfonamides, sulfoxides and halide salts.

Examples of specific organic Lewis bases that can be used in the practice of this invention are acetone, benzophenone, cyclohexanone, methyl acetate, ethylene carbonate, N-methylformamide, acetamide, N,N-dimethylacetamide, N-methylpyrrolidone, urea, tetramethylurea, N-acetylmorpholine, dimethyl sulfoxide, N,N-dimethylformamide, diphenyl sulfone, N,N-dimethylmethanesulfonamide, phosphoryl chloride, phenylphosphonyl chloride pyridine-N-oxide, triphenylphosphine oxide, trioctylphosphine oxide, nitropropane, nitrobenzene, bezonitrile, n-butyronitrile, methyl ether, tetrahydrofuran, dimethyl sulfide, trimethylamine, N,N,N',N'-tetramethylethylenediamine, N,N-dimethyldodecylamine, imidazole, pyridine, quinoline, isoquinoline, benzimidazole, 2,2'-bipyridine, o-phenathroline, 4-dimethylaminopyridine, and the like. In addition to covalent organic compounds, suitable Lewis bases include inorganic salts which can form complexes with Lewis acids, for example, chlorides, such as trimethylammonium chloride, tetramethylammonium chloride, sodium chloride or lithium chloride, perchlorates, trifluoromethanesulfonates and the like.

Preferred Lewis bases for the reaction medium of this invention are N-methylformamide, N,N-dimethylformamide, N,N-dimethylacetamide, 1-methyl-2-pyrrolidone, tetramethylene sulfone (also known as sulfolane), n-butyronitrile, dimethyl sulfide, imidazole, acetone, benzophenone, trimethylamine, trimethylamine hydrochloride, tetramethylammonium chloride, pyridine-N-oxide, 1-ethylpyridinium chloride, lithium chloride, lithium bromide, sodium chloride, sodium bromide, potassium chloride, potassium bromide and mixtures thereof. N,N-dimethylformamide is especially preferred when the Lewis Acid is aluminium trichloride.

The amount of Lewis base present is from 0.01 to 4 equivalents per equivalent of acid halide groups present in the monomer system. No additional controlling effect is usually achieved by adding larger amounts. Thus, no more than 4 equivalents and generally about 2 equivalents, but at least .01, preferably at least 0.05, and most preferably at least 0.5 equivalents, of Lewis base per equivalent of acid halide groups present should be used. The particular amount of Lewis base added depends to a certain extent on the nature of the monomers present.

The temperature at which the reaction is conducted can be from about −50°C to about +150°C. It is preferred to start the reaction at lower temperatures, for example at about −50 to about −10°C particularly if the monomer system contains highly reactive monomers. After polymerization has commenced, the temperature can be raised if desired, for example, to increase the rate of reaction. It is generally preferred to carry out the reaction at temperatures in the range of between about −30°C and +25°C (room temperature).

While it is not understood exactly how the Lewis base acts to control the reaction, it is believed that one or more of the following factors may be involved. The Lewis acid/Lewis base complex appears to act as a solvent for the polymer-Lewis acid complex formed during the reaction, thereby maintaining the polymer in solution or in a reactive gel state. Further, the reaction mixture is more tractable, making work up of the polymer easier and ensuring effective removal of catalyst residues during purification. The solubilization property of the Lewis acid/Lewis base complex is particularly significant in the preparation of para-linked poly(arylene ether ketones). As mentioned above these polymers are more highly crystalline than other members of this polymer family and their complexes with the Lewis acid tend to precipitate from the reaction medium in low molecular weight form and/or in a particularly intractable mass difficult to recover and purify. When such polymers are made in accordance with this embodiment of the invention, it is advantageous to select a Lewis acid and Lewis base combination which form a complex which, in addition to the above specified characteristics, also dissolve the desired polymer. This can readily be determined by preparing a complex, optionally adding a diluent, and then adding the polymer to see if it dissolves.

If a diluent such as methylene chloride or dichloroethane is used, it is believed that the Lewis acid/Lewis base complex reduces the tendency of the diluent to act as an alkylating agent by competing with the diluent for available Lewis acid and thereby suppressing alkylation of the polymer. Alkylation of the polymer in the para position caps the reaction while alkylation in the ortho position introduces undesired reactive sites in the polymer chain which can lead to branching or cross-linking.

A non-protic diluent can also be employed, if desired. Advantageously, the diluent should dissolve the Lewis acid/Lewis base complex and the resulting polymer/Lewis acid complex. It should also be relatively inert toward Friedel-Crafts reactions. The diluent is preferably somewhat polar as measured by its dielectric constant and solubility parameter. Preferably the dielectric constant of the diluent is at least about 2.5 at 24°C, and preferably in the range of from about 4.0 to about 25 at 24°C. The Hildebrand solubility parameter of the diluent is preferably at least about 30 $[J/cm^3]^{\frac{1}{2}}$ (7.2 $[cal/cm^3]^{\frac{1}{2}}$) and is preferably in the range of from about 38.5 to 63 $[J/cm^3]^{\frac{1}{2}}$ (9.2 to about 15 $[cal/cm^3]^{\frac{1}{2}}$). Preferred diluents include, for example, methylene chloride, carbon disulfide, o-dichlorobenzene, 1,2,4-trichlorobenzene, o-difluorobenzene, 1,2-dichloroethane, 1,1,2,2,-tetrachloroethane and mixtures thereof.

The diluent is used preferably in an amount from 0 to 93% by weight, based on the weight of the total reaction mixture. As is known in polymerisations of this type, the reactions can be run neat, that is without the presence of a diluent.

As discussed in more detail below, it has been found that the monomer to diluent molar ratio can contribute to control of the polymerization reaction to yield the desired product. Typically the diluent is used in an amount of at least about 10%, preferably at least about 20% by weight based on the weight of the reaction mixtures.

Use of an alkylating or acylating diluent can lead to undesired side reactions as mentioned above. When such solvents are employed control of the polymerization by techniques taught in this specification suppresses such alkylation or arylation. The result is a thermally stable, melt processable, essentially linear polymer.

As mentioned above, one of the important features of this invention is that poly(arylene ketones) of high molecular weight can be obtained. By "high molecular weight" is meant polymer having an inherent viscosity greater than about 0.6. Preferably the polymer prepared by the process of this invention had an inherent viscosity in the range of about 0.6 to about 2.0. Polymers having an inherent viscosity below about 0.6 are generally not useful because they have poor mechanical properties, such as tensile strength and elongation. They also tend to be brittle while polymers having an inherent viscosity above about 2.0 are very difficult to melt process. Throughout this application, inherent viscosity refers to the mean inherent viscosity determined according to the method of Sorenson et al, "Preparative Methods of Polymer

Chemistry" Interscience (1968), at page 44 [0.1 g polymer dissolved in 100 ml of concentrated sulfuric acid at 25°C].

If desired, the molecular weight of the polymer, the degree of branching and amount of gelation can be controlled by the use of, for example, capping agents as described in U.S. Patent No. 4,247,682 to Dahl. The molecular weight of the polymer can also be controlled by a polymerization reaction utilizing a two-monomer system as described above, by employing a slight excess of one of the monomers.

Capping agents, when employed, are added to the polymerization reaction medium to cap the polymer on at least one end of the polymer chain. This terminates continued growth of that chain and controls the resulting molecular weight of the polymer, as shown by the inherent viscosity of the polymer. Judicious use of the capping agents results in a polymer within a selected narrow molecular weight range, decreased gel formation during polymerization, and decreased branching of the polymer chains and increases melt stability. Both nucleophilic and electrophilic capping agents are used to cap the polymer at each end of the chain.

Preferred nucleophilic capping agents are 4-chlorobiphenyl, 4-phenoxybenzophenone, 4-(4-phenoxyphenoxy)benzophenone, biphenyl 4-benzenesulfonylphenyl phenyl ether.

Typical electrophilic capping agents are compounds of the formula

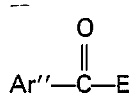

or

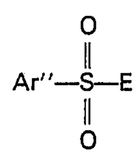

wherein Ar'' is phenyl, 3-chlorphenyl, 4-chlorphenyl, 4-cyanophenyl, 4-methylphenyl or an aromatic group substituted with an electron withdrawing substituent and E is halogen or other leaving group. Preferred electrophilic capping agents include benzoyl chloride, benzenesulfonyl chloride and the like.

As mentioned above, a key aspect of this invention is thought to be that the Lewis acid/Lewis base complex solubilizes or solvates the polymer so that it remains in the reaction medium in a form capable of sustaining continued polymerization so that the desired high molecular weight is obtained in a controlled and reproducible fashion. Lewis acid is also present in the reaction medium as the catalyst for the Friedel-Crafts polymerization reaction. The resulting polymer contains Lewis acid complexed to the carbonyl groups of the polymer. For many polymerizations, the Lewis acid is complexed to substantially all the carbonyl groups in the polymer. As is well known with polymers of this type, the catalyst residue must be removed, i.e. the Lewis acid must be decomplexed from the polymer and removed. A method for removing the catalyst residue is described in US—A—4,237,884.

Decomplexation can be accomplished by treating the polymerization reaction mixture with a decomplexing base after completion of polymerization. The base can be added to the reaction medium or the reaction medium can be added to the base. The decomplexing base must be at least as basic towards the Lewis acid as the basic groups on the polymer chain. Such decomplexation should be effected before isolation of the polymer from the reaction mixture.

The amount of decomplexing base used should be in excess of the total amount of bound (complexed) and unbound Lewis acid present in the reaction mixture and is preferably twice the total amount of Lewis acid. Typical decomplexing bases which can be used include water, dilute aqueous hydrochloric acid, methanol, ethanol, acetone, N,N-dimethylformamide, N,N-dimethylacetamide, pyridine, dimethyl ether, diethyl ether, tetrahydrofuran, trimethylamine, trimethylamine hydrochloride, dimethyl sulfide, tetramethylenesulfone, benzophenone, tetramethylammonium chloride, isopropanol and the like. The decomplexed polymer can then be removed by conventional techniques such as adding a nonsolvent for the polymer which is a solvent for or miscible with the Lewis acid/Lewis base complex and the Lewis acid; spraying the reaction medium into a non-solvent for the polymer; separating the polymer by filtration; or evaporating the volatiles from the reaction medium and then washing with an appropriate solvent to remove any remaining base/catalyst complex and diluent from the polymer.

Example 1

A 500 ml 3 neck round bottom flask equipped with a stirrer, thermometer, and nitrogen inlet was charged with 1,4-diphenoxybenzene (13.2198 g, 0.504 mole), terephthaloyl chloride (10.1515 g, 0.0500 mole), benzoyl chloride (0.1124 g, 0.0008 mole), sulfolane (27.04 g 0.225 mole) and anhydrous methylene chloride (150 milliliters, ml). the atmosphere inside the flask was purged with and kept under nitrogen. The flask and its contents were cooled to −40°C with a dry ice-acetone bath. Anhydrous aluminum chloride (40.7 g, 0.373 mole) was added over a 12 minute period, with continued cooling. The stirred reaction mixture was allowed to warm up to about 15°C over a period of 1.5—2 hours. The red, highly viscous mixture was then transferred to a glass tray under nitrogen, allowed to warm up to 20°C, and added portionwise to rapidly stirred methanol (Waring blender). The resulting fibrous polymer was collected, washed with methanol, and soaked overnight in more methanol. Following a second overnight soaking, this time in water, another methanol wash, and vacuum drying (120—160°C), there was obtained a colourless fibrous polymer (18.9 g, 96.3% yield).

Its inherent visosity was 1.09 (.1% solution in conc. sulfuric acid). Compression molding at 400°C for 3 min gave nearly colourless flexible slabs of essentially unchanged inherent viscosity (1.10). Stress/strain analysis of the slabs gave a Young's modulus of 15236 kg/cm$^2$ (216,700 psi), elongation at break of 80%, and tensile strength of 642 kg/cm$^2$ (9,130 psi), as measured by ASTM D—638—80. Material extruded at 400°C also exhibited no change in inherent viscosity (1.10).

Example 2

To a 250 ml three neck round bottom flask equipped with a mechanical stirrere, a nitrogen inlet, and a thermometer well fitted with a J-type thermocouple was added methylene chloride (30 ml, freshly distilled from phosphorus pentoxide). The flask and its contents were purged with and kept under nitrogen and cooled to −27°C with a dry ice-acetone bath. Anhydrous aluminum chloride (17.68 g, 132.6 mmole) was then added via Gooch tubing. To the resulting cold solution, N,N-dimethylformamide (DMF, 5.54 g, 75.8 mmole, freshly vacuum distilled from calcium hydride) in methylene chloride (15 ml) was added slowly (to control the vigorous exotherm). With continued cooling, a solution of 1,4-diphenoxybenzene (6.6811 g, 25.5 mmole), terephthaloyl chloride (5.1302 g, 25.3 mmole), and benzoyl chloride (0.571 g, 0.40 mmole) in methylene chloride (25 ml) was added. The transferring flask wash rinsed with an additional volume of methylene chloride (10 ml) to ensure complete transfer. The stirred reaction mixture was allowed to warm up to room temperature over a 6.3 hour period, during which time it became a viscous orange-red suspension. It was next cooled down to 5—6°C with an ice bath and the reaction was quenched with DMF (50 ml). At this time, the polymerization mixture became a highly viscous white slurry. The polymer was isolated by filtration, transferred into a 1 qt. glass blender containing cold (0°C) DMF (100 ml), and blended at high speed until room temperature was reached. This process was repeated. the polymer was then digested twice in DMF (250 ml, 50°C, 24 hrs), once in water (300 ml, room temperature, 24 hours), and once in hydrochloric acid (0.5 M, 500 ml, room temperature, 24 hours). After washing with more water and vacuum drying, polymer (8.9 g, 90% yield) of inherent viscosity 1.2 (0.1% in sulfuric acid) was obtained. Its melt stability and processability were demonstrated by the fact that slabs pressed for 30 min at 400°C showed minimal change in inherent viscosity.

Example 3

The procedure of Example 2 was repeated using terephthaloyl chloride (5.17 g, 25.2 mmole), 1,4-diphenoxybenzene (6.56 g. 25.0 mmole) and 4-(4-phenoxyphenoxy)benzophenone (0.1466 g, 0.4 mmole).

The resultant polymer had an inherent viscosity of 1.25. Polymer pressed for 30 minutes at 400°C gave slabs of inherent viscosity 1.34 (average of 2 samples). Pressing at 410°C for 30 minutes gave slabs of inherent viscosity 1.71 (average of 3 samples), with a slight amount of gel.

Example 4

The procedure of Example 2 was repeated using purified aluminum chloride. The initial temperature employed was −15°C and the reaction mixture was allowed to warm up to 8°C. The aluminum chloride was purified prior to introduction into the reaction medium by vacuum distillation from a mixture of 1500 g aluminum chloride, 100 g sodium chloride and 5 g aluminum powder followed by vacuum sublimation.

The polymer thus obtained had an inherent viscosity of 1.17 (average of 2 samples). Slabs pressed at 400 or 410°C for 30 minutes had inherent viscosities of 1.15 (average of 4 samples) and 1.18 (average of 4 samples), respectively. No gel was observed in any of the slabs.

Example 5

A reaction flask equipped with a magnetic stirrer and purged with nitrogen and charged with methylene chloride (8 ml) was cooled in an ice bath. To it was added n-butyronitrile (1.382 g, 0.020 mole) followed by aluminum chloride (6.56 g, 0.050 mole). The latter was added slowly because of the vigorous exotherm generated. When this addition was completed, p-phenoxybenzoyl chloride (2.33 g, 0.010 mole) was added, also gradually. Polymerization was allowed to proceed overnight (about 16 hours) at room temperature. The polymer was recovered by transferring the polymerization mixture into methanol (about 100 ml), breaking it up in a blender at high speed, filtering, and washing generously with methanol. After digesting overnight in more methanol (about 100 ml) at room temperature, the polymer was washed with water and vacuum dried (120—160°C). The product was a white polymer of inherent viscosity 1.69. When compression molded at 400°C for 3 min, it formed a transparent yellow, tough, flexible slab.

Example 6

Example 5 was repeated, but with the Lewis bases (0.020 mole) given in Table I in place of the n-butyronitrile.

TABLE I

| Lewis Base | Color | Inherent Viscosity | Slab (3 min, 400°C) |
|---|---|---|---|
| Dimethyl sulfide | White | 0.79 | Tough, flexible, yellow |
| 1-Nitropropane | White | 0.57 | Tough, flexible, l. tan |
| Pyridine N-oxide | L. pink | 2.5** | Tough, flexible, l. tan |
| Isoquinoline | L. pink | 0.84 | Tough, flexible, l. tan |
| Methylamine hydrochloride | White | 0.40 | Brittle, l. tan |
| 1-Ethylpyridinium bromide | L. pink | 2.50** | Tough, flexible, l. pink |
| Triphenyl phosphine oxide | L. pink | 0.50 (some gel)*** | Flexible, l. tan |
| *Diethylamine hydrochloride | — | 0.77 | Tough, flexible |
| *Diethyl ether | — | 0.80 | Tough, flexible |
| *Imidazole | — | 1.79 | Tough, flexible |
| Acetone | White | 0.73 | Tough, flexible |
| Methyl Acetate | White | (some gel)*** | Tough, flexible |
| N,N-Dimethylformamide | White | 1.82 | Tough, flexible |
| Tetramethylammonium chloride | White | 0.82 | Tough, flexible |

*Run on the scale corresponding to 0.006 mole p-phenoxybenzoyl chloride.
**The high inherent viscosity indicates production of high molecular weight polymer. Use of capping agents so described above would yield a polymer in the desired molecular weight range.
***The presence of gel indicates cross-linking has occurred. The inherent viscosity measurement reflects the molecular weight of the uncross-linked portion of the polymer product.

Example 7

Example 5 was repeated, except that o-dichlorobenzene was used in place of the methylene chloride. The resultant polymer was light yellow and had an inherent viscosity of 1.12. It could be pressed at 400°C into a tough, flexible, pale yellow slab.

Example 8

Example 5 was repeated, except that DMF was substituted for n-butyronitrile and o-difluorobenzene for methylene chloride. The resultant polymer was light yellow and had an inherent viscosity of 1.18. It could be pressed into a tough, flexible, pale yellow slab.

Example 9

Example 5 was repeated, except that DMF was substituted for n-butyronitrile and 1,2,4-trichlorobenzene for methylene chloride. The resultant polymer was white and had an inherent viscosity of 1.50. It could be pressed into a flexible, light colored slab.

Example 10

Diphenyl ether (1.7025 g, 0.010 mole) was polymerized with terephthaloyl chloride (1.6242 g, 0.008 mole) and isophthaloyl chloride (0.04058 g, 0.002 mole) in the presence of methylene chloride (14 ml), trimethylamine hydrochloride (2.19 g, 0.0232 mole), and aluminum chloride (6.0 g, 0.045 mole) by the procedure described in example 5. The resultant polymer had an inherent viscosity of 0.74. It could be pressed into a slab that was light colored and flexible.

Example 11

A suspension of lithium chloride (0.84 g, 0.0198 mole) and aluminium chloride (5.40 g, 0.0405 mole) in 1,2-dichloroethane (7.0 ml) was stirred under nitrogen in a sealed reaction tube for 40 minutes. To the resulting solution was added p-phenoxybenzoyl chloride (2.20 g, 0.00945 mole). Polymerization was permitted to continue at room temperature for about 90 minutes to yield a highly viscous solution. 1,2-dichloroethane (4 ml) was added to dilute the reaction mass. The polymer was recovered by decomplexation of the mixture with water in a Waring blender, washing with a water/methanol solution, soaking the product in water overnight, then washing with methanol and drying. The product was a colorless polymer having an inherent viscosity of 1.58. When compression moulded at 400°C for 2 minutes, it formed a pale yellow tough, flexible slab.

Example 12

A 500 ml 3-neck round bottom flask equipped with a stirrer, thermometer and nitrogen inlet was charged with N,N-dimethylformamide (16.45 g, 0.2250 mole) and anhydrous methylene chloride (150 ml). The atmosphere inside the flask was purged with nitrogen. The flask was cooled to −30°C with a dry ice-acetone bath. Anhydrous aluminum chloride (75.30 g, 0.5647 mole), followed by 4,4'-diphenoxybenzophenone (18.3940 g, 0.05020 mole), terephthaloyl chloride (10.1510 g, 0.0500 mole) and benzoyl chloride (0.0493 g, 0.3500 mmole) were added with continued cooling. The transferring flasks were rinsed with anhydrous methylene chloride (50 ml total) to ensure complete transfer. The stirred reaction mixture was allowed to warm up to 0°C in 15 minutes and to 21°C in 1.5 hours. Part of the viscous reaction mixture was added portionwise to rapidly stirred methanol (Waring blender). The resulting fibrous polymer was collected, washed with methanol and vacuum dried (120—160°C). Its inherent viscosity was 1.28 (0.1% in sulfuric acid). The remaining part of the viscous reaction mixture was added portionwise to rapidly stirred 10% hydrochloric acid (Waring blender). The fibrous polymer obtained was washed with water, then refluxed 15 minutes in N,N-dimethylacetamide, washed with water and vacuum dried (120—160°C). Its inherent viscosity was 1.37. A compression molded slab pressed at 400°C for 20 minutes showed an inherent viscosity of 1.40, indicating melt stability. Its processability was further demonstrated by extrusion at 400°C through a mini-extruder to give a light tan, flexible and smooth strand of extrudate of 1.42 inherent viscosity.

Example 13

A 50 ml 3 neck round bottom flask equipped with a stirrer, thermometer and nitrogen inlet was charged with aluminum trichloride (6.29 g, 0.0472 mole) and lithium chloride (1.00 g, 0.0236 mole) in 1,2-dichloroethane (17 ml) was cooled to 0°C in an ice-acetone bath. Diphenyl ether (2.01 g, 0.0118 mole) and phosgene (2.80 g, 0.0283 mole) were then added. The bath was removed and the reaction mixture was permitted to warm to room temperature (24°C). The mixture was stirred at 24°C for 23 hours. A clear deep red viscous mass formed. Additional diphenyl ether (0.060 g $6 \times 10^{-4}$ mole) was then added and the reaction mixture stirred for 2 hours. The reaction mass was added to cold methanol (Waring blender), filtered and the precipitate was washed in methanol overnight then soaked in water. The mixture was filtered, rinsed with methanol and dried under vacuum at 120°C. The resulting polymer (2.15 g, 92% yield) was an off-white powder having an inherent viscosity of 0.60 (0.1% in concentrated sulfuric acid).

Compression molding at 400°C yielded a light colored, tough, flexible slab. The slab became brittle on annealing.

Example 14

The procedure of Example 13 was repeated using 4,4'-diphenoxybenzophenone (2.162 g, 0.0059 mole), phosgene (1.43 g, 0.0144 mole), lithium chloride (1.00 g, 0.0236 mole) and aluminum trichloride (6.24 g, 0.0468 mole) in 1,2-dichloroethane (8 ml). The resulting product (2.2 g, 94% yield) was an off-white polymer having a relatively high gel content which formed a yellow flexible slab when pressed at 400°C.

Example 15

*Procedure A:* N,N-Dimethylformamide (DMF, 1.45 g, 0.020 mole) was added dropwise with cooling and stirring to anhydrous aluminum chloride (5.70 g, 0.043 mole). An exotherm ensued, leading to a hot, fluid melt with a few suspended aluminum chloride particles. The fluid was kept at 100—110°C for 5—10 minutes under nitrogen. Upon cooling, a light colored liquid was obtained, apparently containing some still undissolved aluminum chloride. *p*-Phenoxybenzoyl chloride (3.00 g, 0.013 mole) was added with stirring. The entire mixture was heated according to the schedule in the accompanying table, cooled, and worked up by precipitating into methanol, washing with water and methanol, and drying.

*Procedure B:* The reaction was carried out as above, but with the following amounts of chemicals: DMF (1.46 g, 0.02 mole), anhydrous aluminum chloride (5.32 g, 0.040 mole), and *p*-phenoxybenzoyl chloride (1.60 g, 0.007 mole). The polymerization mixture was not heated, but was instead maintained at room temperature for the times indicated.

Results are given in the table below. Inherent viscosities reported are those of the polymer as obtained, and not of the slabs. Slabs, if noted, were pressed at 400°C for 3 minutes.

TABLE II

| Procedure | Time/Temp. Profile | Inh. Visc. | Comments |
|---|---|---|---|
| B | 62 hr/24°C | 1.46 | Flexible yellow-red slab |
| B | 17 hr/24°C | 0.57 | Light colored polymer |
| A | 15 min/24°C and 10 min/100—20°C | 1.14 | Pale yellow polymer; light colored, flexible slab |
| A | 1 hr/24°C and 15 min/100°C | 0.86 | Colorless crystalline slab |
| A | 5 min/24°C, 5 min/80–100°C, 5 min/150—70°C, and 2 min/170—80°C | 0.73 | Light tan flexible slab |

Example 16

A stock solution was prepared from *p*-phenoxybenzophenone (0.6165 g, 0.00225 mole), benzoyl chloride (0.3032 g, 0.00215 moles), dichloroethane (63.6 g), and *p*-phenoxybenzoyl chloride (116.2 g, 0.400 mole) and stored at room temperature in a flask stoppered with an air/no-air septum. This stock solution was sufficient for about twenty polymerizations of the scale below. Polymer prepared from this stock solution is double-capped at 0.6 mole % (calculated from the ratio of *p*-phenoxybenzophenone, the limiting capping agent, to *p*-phenoxybenzoyl chloride).

A reactor consisting of 200 ml resin kettle and a top with four openings to which were attached a mechanical stirrer with a PTFE paddle, a 50 ml addition funnel, a glass-clad thermocouple probe and an inert gas supply tube was assembled. (Glass equipment was dried at 100°C until just prior to use.) All ground glass joints were sealed with PTFE seals, except for the stirrer shaft which was sealed with vacuum grease. The assembled reactor was dried with a hot air gun or Bunsen burner while being flushed with nitrogen or argon. The inert gas atmosphere was maintained throughout the operations except for momentary interruptions for the addition of reagents.

The reactor was charged with, in order, anhydrous aluminum chloride (10.0 g, 0.075 mole, Witco £0099), lithium chloride (1.59 g, 0.0375 mole, ACS Reagent Grade), and 1,2-dichloroethane (10.0 g). The white slurry was cooled to between −15 and −25°C with a dry ice/acetone bath.

Monomer stock solution (9.04 g) was added dropwise over a 7 minute period with continued stirring and cooling. After the completion of this addition, the reaction mixture's temperature was maintained at −15°C for one hour and then raised to 0°C and maintained there for 23 hours. Approximately 2—3 hours after addition of the monomers, a notable increase in viscosity occurred. At this point stirring became extremely difficult and was usually discontinued.

The polymer could be isolated by one of two workup procedures:

(A) The reaction mixture was transferred into a 500 mL Waring blender containing DMF (100—200 ml) chilled to −40°C. The blender was turned on and the dark orange gel transformed into a white, decomplexed polymer. The polymer was collected by filtration, washed with DMF (100 ml), digested in DMF (100 ml, 50°C, overnight), filtered, and digested in water (2 × 150 ml, 60°C, 1 hr each). After filtration, the polymer was dried overnight at 165°C in a vacuum oven.

(B) The reaction mixture was transferred into a 500 ml Waring blender containing 2% aqueous hydrochloric acid (200 ml) at room temperature. The blender was turned on and the dark orange gel transformed into white, decomplexed polymer. The polymer was collected by filtration, washed with 2% aqueous hydrochloric acid (200 ml) and digested successively in methanol (200 ml, overnight, 40°C) and in hot 2% aqueous hydrochloric acid (2 × 200 ml, 1 hr each). After filtration, the polymer was washed with deionized water (500 ml) and dried overnight at 165°C in a vacuum oven.

A white fluffy polymer with inherent viscosity 1.1—1.2 dl/g was obtained. The inherent viscosity did not change by more than 0.10 dl/g after 30 min at 400°C.

Example 17

This example demonstrates the suppression of undesirable side reactions by polymerization in the presence of a Lewis base (in this case, lithium chloride). Two polymerizations were performed, employing the procedure of Example 16 workup B, with the following exceptions: (1) the capping level was 0.45 mole%, (2) the time-temperature profile was 1 hr/0°C followed by room temperature reaction, and (3) one of the reactions was run without lithium chloride (comparative). Aliquots were taken out at the times indicated in the accompanying table and figure, worked up, and analyzed.

While the reaction with lithium chloride responds as expected to capping and achieves stable molecular weight after about fifteen hours, the one without lithium chloride does not respond to capping, but instead keeps increasing in molecular weight, indicating the occurrence of substantial side reactions. The polymer from the lithium chloride reaction was more melt stable.

TABLE III
Polymer Inherent Viscosity After Time at 400°C (min)

| Reaction Time (hrs) | 0 | 5 | 30 | 60 |
|---|---|---|---|---|
| *With Lithium Chloride* | | | | |
| 6 | 1.08 | 1.08 | 1.24 | 1.19 |
| 8 | 1.09 | 1.12 | 1.15 | 1.30 |
| 10 | 1.11 | 1.14 | 1.12 | gel |
| 13 | 1.20 | — | 1.35 | — |
| 26 | 1.32 | 1.24 | 1.36 | 1.18 |
| 32 | 1.33 | 1.34 | 1.32 | gel |
| *Without Lithium Chloride (comparative)* | | | | |
| 6 | 0.93 | 0.94 | — | 1.09 |
| 8 | 1.02 | 1.00 | 0.97 | gel |
| 10 | 1.05 | 1.13 | 1.18 | gel |
| 13 | 1.15 | 1.12 | 1.12 | gel |
| 26 | 1.72 | — | gel | — |
| 32 | 2.15 | — | gel | — |

Example 18

The procedure of Example 16, workup A, was followed, with these exceptions: (1) p-phenoxybenzophenone (0.45 mole %) was the only capping agent and (2) the amount of 1,2-dichloroethane was adjusted to achieve the indicated per cent loading. For the purposes of this example, "per cent loading" is defined as 100 times the ratio of the theoretical yield (in grams) of polymer to the sum (in grams) of monomer, capping agent, Lewis acid, Lewis base, and solvent in the reaction mixture.

The results are tabulated below showing the effect of monomer concentration on inherent viscosity of the polymer.

TABLE IV

| Per Cent Loading | Polymer Inh. Visc. |
|---|---|
| 5 | 0.51 |
| 10 | 0.80 |
| 12 | 1.00 |
| 14 | 1.11 |
| 16 | 1.15 |
| 18 | 1.18 |
| 20 | 0.90 |

Example 19

A reaction flask equipped with a magnetic stirrer and a nitrogen inlet was charged with methylene chloride (8 ml) and N,N-dimethylformamide (1.45 g, 20 mmol). Anhydrous aluminium bromide (13.33 g, 50 mmol) was added gradually, with cooling (exotherm ensues), followed by p-phenoxybenzoyl chloride (2.33 g, 10 mmol). Polymerization was allowed to proceed overnight at room temperature. The polymer was isolated by precipitating it into methanol and washing overnight at room temperature consecutively with methanol and water.

The polymer was a white powder with inherent viscosity 1.03. A slab pressed at 400°C for 5 minutes was transparent and flexible.

Example 20

This example demonstrates the benefits of polymerizing terephthaloyl chloride with a comonomer as defined in I(ii)(a), I(ii)(b), or I(ii)(c) in the presence of a Lewis base.

Terephthaloyl chloride was polymerized with 1,4-diphenoxybenzene with and without lithium chloride added, according to the procedure of Example 16, workup A, with exceptions as noted: (1) the "percent loading", as defined hereinbefore, was about 12%, (2) the polymerizations were capped by employing 0.8 mole % excess of 1,4-diphenoxybenzene and 0.16 mole % of benzoyl chloride, (3) where lithium chloride was added, it was in the amount of 1 equivalent per equivalent of acid halide groups, and (4) the equivalent % excess of aluminium chloride over the sum of acid halide and lithium chloride equivalents was 10%.

The reaction with lithium chloride was homogeneous and gave polymer with inherent viscosity 0.91, while one without lithium chloride was heterogeneous and gave polymer of inherent viscosity 0.60.

**Claims**

1. A method of producing a poly(arylene ether ketone) which comprises polymerizing a monomer system comprising:

I (i) phosgene or an aromatic diacid dihalide together with

(ii) a polynuclear aromatic comonomer containing an arylene ether group and two active hydrogen atoms

or

II a polynuclear aromatic monomer containing an acid halide group, an arylene ether group, and an active hydrogen atom,

in a reaction medium comprising a Lewis base, in an amount of 0.01 to 4 equivalents per equivalent of acid halide groups present in the monomer system; and a Lewis acid in an amount of at least one equivalent per equivalent of carbonyl groups present, plus one equivalent per equivalent of the Lewis base, plus an amount effective to act as a catalyst for the polymerization.

2. A method of producing a poly(arylene ether ketone) which comprises polymerizing a monomer system comprising:

I (i) phosgene or an aromatic diacid dihalide together with

(ii) a polynuclear aromatic comonomer comprising:

(a) H—Ar—O—Ar—H

(b) H—(Ar—O)$_n$—Ar—H wherein n is 2 or 3

(c) H—Ar—O—Ar—(CO—Ar—O—Ar)$_m$—H wherein m is 1, 2 or 3 or

(d) H—(Ar—O)$_n$—Ar—CO—Ar—(O—Ar)$_m$—H wherein m is 1, 2 or 3, and n is 2 or 3 or

II an acid halide of the formula:

$$H—Ar—O—[(Ar—CO)_p—(Ar—O)_q—(Ar—CO)_r]_k—Ar—CO—Z$$

wherein Z is halogen, k is 0, 1 or 2, p is 1 or 2, q is 0, 1 or 2 and r is 0, 1 or 2; or

III) an acid halide of the formula:

$$H(Ar—O)_n—Ar—Y$$

wherein n is 2 or 3 and Y is CO—Z or CO—Ar—CO—Z where z is halogen;

wherein each Ar is independently selected from substituted or unsubstituted phenylene, and substituted and unsubstituted polynuclear aromatic moieties free of ketone carbonyl and ether oxygen groups;

in a reaction medium comprising

A) a Lewis base in an amount from 0.01 to 4 equivalents per equivalent of acid halide groups present in the monomer systgem;

B) a Lewis acid in an amount of at least one equivalent per equivalent of carbonyl groups present, one equivalent per equivalent of the Lewis base, plus an amount effective to act as a catalyst for the polymerization; and

C) a non-protic diluent in an amount from 0 to 93% by weight, based on the weight of the total reaction mixture.

3. A method in accordance with Claim 1 or 2 wherein said monomer system comprises p-phenoxybenzoyl chloride.

4. A method in accordance with Claim 1 or 2 wherein said monomer system comprises 1,4-diphenoxybenzene and terephthaloyl chloride.

5. A method in accordance with Claim 1 or 2 wherein said monomer system comprises 4,4'-diphenoxybenzophenone and phosgene or terephthaloyl chloride.

6. A method in accordance with Claim 1 or 2 wherein said monomer system comprises diphenyl ether and phosgene.

7. A method in accordance with Claim 1 or 2 wherein said monomer system comprises 1,4-diphenoxybenzene and phosgene.

8. A method in accordance with any of the preceding claims, wherein said Lewis acid is selected from aluminium trichloride, boron trichloride, aluminium tribromide, titanium tetrachloride, antimony pentachloride, ferric chloride, gallium trichloride, and molybdenum pentachloride.

9. A method in accordance with any of the preceding claims wherein said Lewis base is selected from amides, amines, esters, ethers, thioethers, ketones, nitriles, nitro compounds, phosphines, phosphine oxides, phosphoramides, sulfides, sulfones, sulfonamides, sulfoxides and halide salts.

10. A method in accordance with claim 9 wherein said Lewis base is selected from acetone, benzophenone, cyclohexanone, methyl acetate, ethylene carbonate, N-methylformamide, acetamide, N,N-dimethylacetamide, N-methylpyrrolidone, urea, tetramethylurea, N-acetylmorpholine, dimethyl sulfoxide, diphenyl sulfone, N,N-dimethylmethanesulfonamide, phosphoryl chloride, phenylphosphonyl chloride, pyridine-N-oxide, triphenylphosphine oxide, trioctylphosphine oxide, nitropropane, nitrobenzene, benzonitrile, n-butyronitrile, methyl ether, tetrahydrofuran, dimethyl sulfide, trimethylamine, N,N,N',N'-tetramethylethylenediamine, N,N'-dimethyldodecylamine, imidazole, pyridine, quinoline, isoquinoline, benzimidazole, 2,2'-bipyridine, O-phenanthroline and 4-dimethyl aminopyridine.

11. A method in accordance with Claim 9 wherein said Lewis base is selected from N-methylformamide, N,N-dimethylformamide, N,N-dimethylacetamide, 1-methyl-2-pyrrolidone, tetramethylene sulfone, n-butyronitrile, dimethylsulfide, imidazole, acetone, benzophenone, trimethylamine, trimethylamine hydrochloride, tetramethylammonium chloride, pyridine-N-oxide, 1-ethylpyridinium chloride, lithium chloride, lithium bromide, sodium chloride, sodium bromide and mixtures thereof.

12. A method in accordance with any of claims 1 to 7, wherein said Lewis acid is aluminium trichloride and said Lewis base is N,N-dimethylformamide, n-butyronitrile, tetramethylammonium chloride or lithium chloride.

13. A method in accordance with any of the preceding claims, wherein said polymerization is carried out in the presence of a non-protic diluent having a dielectric constant of at least 2.5 at 24°C.

14. A method in accordance with Claim 13 wherein said diluent has a dielectric constant in the range of from 4.0 to 25 at 24°C.

15. A method in accordance with Claim 13 wherein said diluent is selected from the group consisting of methylene chloride, carbon disulfide, o-dichlorobenzene, 1,2,4-trichlorobenzene, o-difluorobenzene, 1,2-dichloroethane, 1,1,2,2-tetrachloroethane and mixtures thereof.

16. A method in accordance with any of the preceding claims, wherein a capping agent is added to the reaction medium.

17. A method in accordance with Claim 16 wherein both a nucleophilic and an electrophilic capping agent are added to the reaction medium.

18. A method in accordance with Claim 17 wherein said nucleophilic capping agent is selected from the group consisting of 4-chlorobiphenyl, 4-phenoxybenzophenone, biphenyl, 4-(4-phenoxyphenoxy)benzophenone and 4-benzenesulfonylphenyl phenyl ether.

19. A method in accordance with Claim 17 or 18 wherein said electrophilic capping agent is selected from the group consisting of benzoyl chloride and benzenesulfonyl chloride.

20. A method in accordance with any of the preceding claims, wherein the polymerization is conducted at a temperature in the range of −30°C to +25°C.

**Patentansprüche**

1. Verfahren zur Herstellung eines Polyarylenetherketons, umfassend die Polymerisation eines Monomer-Gemisches, welches

I (i) Phosgen oder ein aromatisches Disäuredihalogenid zusammen mit

(ii) einem polynuklearen aromatischen Comonomeren, enthaltend eine Arylenethergruppe und zwei aktive Waserstoffatome, oder

II ein polynukleares aromatisches Monomer mit einer Säurehalogenidgruppe, einer Arylenethergruppe und einem aktiven Wasserstoffatom,

aufweist, in einem Reaktionsmedium, enthaltend eine Lewis-Base in einer Menge von 0,01 bis 4 Äquivalenten pro Äquivalent der im Monomer-System vorliegendem Säurehalogenidgruppen; sowie eine Lewis-Säure in einer Menge von mindestens einem Äquivalent pro Äquivalent der vorliegenden Carbonylgruppen plus einem Äquivalent pro Äquivalent Lewis-Base plus einer wirksamen Menge, die als Katalysator für die Polymerisation wirkt.

2. Verfahren zur Herstellung eines Polyarylenetherketons, umfassend die Polymerisation eines Monomer-Systems, welches

I (i) Phosgen oder ein aromatisches Disäuredihalogenid zusammen mit

(ii) einem polynuklearen aromatischen Comonomeren, enthaltend

(a) H—Ar—O—Ar—H,

(b) H—$(Ar—O)_n$—Ar—H, worin n gleich 2 oder 3 ist,

(c) H—Ar—O—Ar—$(CO—Ar—O—Ar)_m$—H, worin m gleich 1, 2 oder 3 ist, oder

(d) H—$(Ar—O)_n$—Ar—CO—Ar—$(O—Ar)_m$—H, worin m gleich 1, 2 oder 3, und n gleich 2 oder 3 ist;

oder

II ein Säurehalogenid der Formel:

$$H—Ar—O—[(Ar—CO)_p—(Ar—O)_q—(Ar—CO)_r]_k—Ar—CO—Z,$$

worin Z gleich Halogen ist; k gleich 0, 1 oder 2 ist; p gleich 1 oder 2 ist; q gleich 0, 1 oder 2 ist und r gleich 0, 1 oder 2 ist;

oder

III) ein Säurehalogenid der Formel:

$$H(Ar—O)_n—Ar—Y$$

worin n gleich 2 oder 3 ist und Y CO—Z oder CO—Ar—CO—Z ist, wobei Z Halogen darstellt;

worin jedes Ar unabhängig ausgewählt ist aus substituiertem und unsubstituiertem Phenylen, und substituierten und unsubstituierten polynuklearen aromatischen Bestandteilen, die frei von ketonischen Carbonylgruppen und Ether-Sauerstoffgruppen sind, aufweist, in einem Reaktionsmedium enthaltend

A) eine Lewis-Base in einer Menge von 0,01 bis 4 Äquivalenten pro Äquivalent an im Monomer-System vorliegenden Säurehalogenid-Gruppen;

B) eine Lewis-Säure in einer Menge von mindestens einem Äquivalent pro Äquivalent an vorliegenden Carbonylgruppen, einem Äquivalent pro Äquivalent Lewis-Base, plus einer wirksamen Menge, um bei der Polymerisation als Katalysator zu wirken;

und

C) ein aprotisches Verdünnungsmittel in einer Menge von 0 bis 93 Gew.-%, bezogen auf das Gewicht der gesamten Reaktionsmischung.

3. Verfahren gemäß Anspruch 1 oder 2, bei dem das Monomer-System p-Phenoxybenzoylchlorid enthält.

4. Verfahren gemäß Anspruch 1 oder 2, bei dem das Monomer-System 1,4'-Diphenoxybenzol und Terephthalsäurechlorid enthält.

5. Verfahren gemäß Anspruch 1 oder 2, bei dem das Monomer-System 4,4'-Diphenoxybenzophenon und Phosgen oder Terephthalsäurechlorid enthält.

6. Verfahren gemäß Anspruch 1 oder 2, bei dem das Monomer-System Diphenylether und Phosgen enthält.

7. Verfahren gemäß Anspruch 1 oder 2, bei dem das Monomer-System 1,4-Diphenoxybenzol und Phosgen enthält.

8. Verfahren gemäß einem der vorangehenden Ansprüche, bei dem die Lewis-Säure ausgewählt ist aus Aluminiumtrichlorid, Borontrichlorid, Aluminiumtribromid, Titantetrachlorid, Antimonpentachlorid, Eisenchlorid, Galliumtrichlorid und Molybdänpentachlorid.

9. Verfahren gemäß einem der vorangehenden Ansprüche, bei dem die Lewis-Base ausgewählt ist aus Amiden, Aminen, Estern, Ethern, Thioethern, Ketonen, Nitrilen, Nitroverbindungen, Phosphinen, Phosphinoxiden, Phosphoramiden, Sulfiden, Sulfonen, Sulfonamiden, Sulfoxiden und Halogenid-Salzen.

10. Verfahren gemäß ANspruch 9, bei dem die Lewis-Base ausgewählt ist aus Aceton, Benzophenon, Cyclohexanon, Methylacetat, Ethylencarbonat, N-Methylformamid, Acetamid, N,N-Dimethylacetamid, N-Methylpyrrolidon, Harnstoff, Tetramethylharnstoff, N-Acetylmorpholin, Dimethylsulfoxid, Diphenylsulfon, N,N-Dimethylmethansulfonamid, Phosphorylchlorid, Phenylphosphonylchlorid, Pyridin-N-oxid, Triphenylphosphinoxid, Trioctylphosphinoxid, Nitropropan, Nitrobenzol, Benzonitril, n-Butyronitril, Methylether, Tetrahydrofuran, Dimethylsulfid, Trimethylamin, N,N,N',N'-Tetramethylethylendiamin, N,N'-Dimethyldodecylamin, Imidazol, Pyridin, Chinolin, Isochinolin, Benzimidazol, 2,2'-Bipyridin, O-Phenanthrolin und 4-Dimethylaminopyridin.

11. Verfahren gemäß Anspruch 9, bei dem die Lewis-Base ausgewählt ist aus N-Methylformamid, N,N-Dimethylformamid, N,N-Dimethylacetamid, 1-Methyl-2-pyrrolidon, Tetramethylensulfon, n-Butyronitril, Dimethylsulfid, Imidazol, Aceton, Benzophenon, Trimethylamin, Trimethylaminhydrochlorid, Tetramethylammoniumchlorid, Pyridin-N-oxid, 1-Ethylpyridiniumchlorid, Lithiumchlorid, Lithiumbromid, Natriumchlorid, Natriumbromid und Mischungen daraus.

12. Verfahren gemäß einem der Ansprüche 1 bis 7, bei dem die Lewis-Säure Aluminiumtrichlorid ist und die Lewis-Base N,N-Dimethylformamid, n-Butyronitril, Tetramethylammoniumchlorid oder Lithiumchlorid.

13. Verfahren gemäß einem der vorangehenden Ansprüche, bei dem die Polymerisation in Gegenwart

eines aprotischen Lösungsmittels mit einer Dielektrizitätskonstanten von mindestens 2,5 bei 24°C durchgeführt wird.

14. Verfahren gemäß Anspruch 13, bei dem das Verdünnungsmittel eine Dielektrizitätskonstante im Bereich von 4,0 bis 25 bei 24°C hat.

15. Verfahren gemäß Anspruch 13, bei dem das Verdünnungsmittel aus der Gruppe bestehend aus Methylenchlorid, Schwefelkohlenstoff, o-Dichlorbenzol, 1,2,4-Trichlorbenzol, o-Difluorbenzol, 1,2-Dichlorethan, 1,1,2,2-Tetrachlorethan und Mischungen davon, ausgewählt ist.

16. Verfahren gemäß einem der vorangehenden Ansprüche, bei dem zu dem Reaktionsmedium ein abschließendes Agens (capping agent) zugegeben wird.

17. Verfahren gemäß Anspruch 16, bei dem ein nukleophiles und ein elektrophiles abschließendes Agens zu dem Reaktionsmedium gegeben werden.

18. Verfahren gemäß Anspruch 17, bei dem das nukleophile abschließende Agens aus der Gruppe bestehend aus 4-Chlorbiphenyl, 4-Phenoxybenzophenon, Biphenyl, 4-(4-Phenoxyphenoxy)benzophenon und 4-Benzolsulfonylphenylphenylether, ausgewählt ist.

19. Verfahren gemäß Anspruch 17 oder 18, bei dem das elektrophile abschließende Agens aus der Gruppe, bestehend aus Benzoylchlorid und Benzolsulfonsäurechlorid, ausgewählt ist.

20. Verfahren gemäß einem der vorangehenden Ansprüche, bei dem die Polymerisation bei einer Temperatur im Bereich von −30°C bis +25°C durchgeführt wird.

## Revendications

1. Méthode de production d'une poly(arylène-éther-cétone) qui comprend la polymérisation d'un système monomère comprenant:

I (i) le phosgène ou un dihalogénure de diacide aromatique avec

(ii) un comonomère aromatique polynucléaire contenant un groupe éther arylène et deux atomes d'hydrogène actifs,

ou

II un monomère aromatique polynucléaire contenant un groupe d'halogénure d'acide, un groupe d'éther arylène, et un atome d'hydrogène actif, dans un milieu réactionnel comprenant une base de Lewis, en quantité allant de 0,01 à 4 équivalents par équivalent de groupes d'halogénure d'acide présents dans le système monomère, et un acide de Lewis en quantité d'au moins un équivalent par équivalent de groupes carbonyle présents, plus un équivalent par équivalent de la base de Lewis, plus une quantité efficace pour agir en tant que catalyseur de la polymérisation.

2. Méthode de production d'une poly(arylène-éther-cétone) qui comprend la polymérisation d'un système monomère comprenant:

I (i) le phosgène ou un dihalogénure de diacide aromatique avec

(ii) un comonomère aromatique polynucléaire comprenant:

(a) H—Ar—O—Ar—H

(b) H—(Ar—O)$_n$—Ar—H où n est 2 ou 3

(c) H—Ar—O—Ar—(CO—Ar—O—Ar)$_m$—H où m est 1, 2 ou 3

ou

(d) H—(Ar—O)$_n$—Ar—CO—Ar—(O—Ar)$_m$—H où m est 1, 2 ou 3, et n est 2 ou 3

II un halogénure d'acide de formule:

$$H—Ar—O—[(Ar—CO)_p—(Ar—O)_q—(Ar—CO)r]_k—Ar—CO—Z$$

dans lequel Z est un halogène, k est 0, 1 ou 2, p est 1 ou 2, q est 0, 1 ou 2 et r est 0, 1 ou 2, ou

III) un halogénure d'acide de formule:

$$H(Ar—O)_n—Ar—Y$$

où n est 2 ou 3 et Y est CO—Z ou CO—Ar—CO—Z où Z est un halogène,

dans lesquels chaque Ar est choisi indépendamment parmi un phénylène substitué ou non substitué et de restes aromatiques polynucléaires substitués ou non substitués, exempts de groupe carbonyles cétoniques et de groupes oxygène d'éther, dans un milieu réactionnel comprenant

A) une base de Lewis en quantité allant de 0,01 à 4 équivalents par équivalent de groupes d'halogénures d'acide présents dans le système monomère,

B) un acide de Lewis en quantité d'au moins un équivalent par équivalent de groupes carbonyle présents, un équivalent par équivalent de base de Lewis, plus une quantité efficace pour agir comme catalyseur pour la polymérisation,

et

C) un diluant non-protique en quantité allant de 0 à 93% en poids, basé sur le poids du mélange réactif total.

3. Méthode selon la revendication 1 ou 2, dans laquelle ledit système monomère comprend du chlorure p-phénoxybenzoyle.

4. Méthode selon la revendication 1 ou 2, dans laquelle ledit système monomère comprend du 1,4-diphénoxybenzène et du chlorure de térephthaloyle.

5. Méthode selon la revendication 1 ou 2, dans laquelle ledit système monomère comprend de la 4,4'-diphénoxybenzophénone et du phosgène ou du chlorure de térephthaloyle.

6. Méthode selon la revendication 1 ou 2, dans laquelle ledit système monomère comprend de l'éther diphénylique et du phosgène.

7. Méthode selon la revendication 1 ou 2, dans laquelle ledit système monomère comprend du 1,4-diphénoxybenzène et du phosgène.

8. Méthode selon l'une quelconque des revendications précédentes, dans laquelle ledit acide de Lewis est choisi parmi trichlorure d'aluminium, trichlorure de bore, tribromure d'aluminium, tétrachlorure de titane, pentachlorure d'antimoine, chlorure ferrique, trichlorure de gallium, et pentachlorure de molybdène.

9. Méthode selon l'une quelconque des revendications précédentes, dans laquelle ladite base de Lewis est choisie parmi les amides, amines, esters, éthers, thioéthers, cétones, nitriles, composés nitro, phosphines, oxydes de phosphine, phosphoramides, sulfures, sulfones, sulfonamides, sulfoxydes et sels halogénés.

10. Méthode selon la revendication 9, dans laquelle ladite base de Lewis est choisie parmi acétone, benzophénone, cyclohexanone, acétate de méthyle, carbonate d'éthylène, N-méthylformamide, acétamide, N,N-diméthylacétamide, N-méthylpyrrolidone, urée, tétraméthylurée, N-acétylmorpholine, sulfoxyde de diméthyle, diphényl sulfone, N,N-diméthylméthanesulfonamide, chlorure de phosphoryle, chlorure de phénylphosphonyle, pyridine-N-oxyde, oxyde de triphénylphosphine, oxyde de trioctylphosphine, nitropropane, nitrobenzène, benzonitrile, n-butyronitrile, éther méthylique, tétrahydrofurane, sulfure de diméthyle, triméthylamine, N,N,N',N'-tétraméthyléthylènediamine, N,N'-diméthyldodecylamine, imidazole, pyridine, quinoline, isoquinoline, benzimidazole, 2,2'-bipyridine, O-phénanthroline et 4-diméthyl aminopyridine.

11. Méthode selon la revendication 9, dans laquelle ladite base de Lewis est choisi parmi N-méthylformamide, N,N-diméthylformamide, N,N-diméthylacétamide, 1-méthyl-2-pyrrolidone, tétraméthylène sulfone, n-butyronitrile, sulfure de diméthyle imidazole, acétone, benzophénone, triméthylamine, dichlorhydrate de triméthylamine, chlorure de tétraméthylammonium, pyridine-N-oxyde, chlorure de 1-éthylpyridinium, chlorure de lithium, bromure de lithium, chlorure de sodium, bromure de sodium et les mélanges de ceux-ci.

12. Méthode selon l'une quelconque des revendications 1 à 7, dans laquelle ledit acide de Lewis est du trichlorure d'aluminium et ladite base de Lewis est du N,N-diméthylformamide, n-butyronitrile, chlorure de tétraméthylammonium ou chlorure de lithium.

13. Méthode selon l'une quelconque des revendications précédentes dans laquelle ladite polymérisation est effectuée en présence d'un diluant non-protique présentant une constante diélectrique d'au moins 2,5 à 24°C.

14. Méthode selon la revendication 13, dans laquelle ledit diluant présente une constante diélectrique dans la gamme de 4,0 à 25 à 24°C.

15. Méthode selon la revendication 13, dans laquelle ledit diluant est choisi parmi le groupe constitué par le chlorure de méthylène, disulfure de carbone, o-dichlorobenzène, 1,2,4-trichlorobenzène, o-difluorobenzène, 1,2-dichloroéthane, 1,1,2,2-tétrachloroéthane et les mélanges de ceux-ci.

16. Méthode selon l'une quelconque des revendications précédentes, dans laquelle un agent de terminaison est ajouté au milieu réactionnel.

17. Méthode selon la revendication 16 dans laquelle un agent de terminaison nucléophile et électrophile sont ajoutés au milieu réactionnel.

18. Méthode selon la revendication 17, dans laquelle ledit agent de terminaison nucléophile est choisi parmi le groupe constitué de 4-chlorobiphényle, 4-phénoxybenzophénone, biphényle, 4-(4-phénoxyphénoxy)benzophénone et l'éther de 4-benzènesulfonylphényle phényle.

19. Méthode selon la revendication 17 ou 18, dans laquelle ledit agent de terminaison électrophile est choisi parmi les groupes consistants de chlorure de benzoyle et de chlorure de benzènesulfonyle.

20. Méthode selon l'une quelconque des revendications précédentes, dans laquelle la polymérisation est conduite à une température dans la gamme de −30°C à +25°C.